# EUROPEAN PATENT SPECIFICATION

(11) **EP 3 565 302 B1**
(45) Date of publication and mention of the grant of the patent: **15.04.2026**
(21) Application number: 17890707.7
(22) Date of filing: 05.01.2017
(51) Int. Cl.: H04W 74/0833, H04W 74/08, H04W 74/0836

(54) **METHOD FOR RANDOM ACCESS AND TERMINAL DEVICE**
VERFAHREN FÜR DIREKTZUGRIFF UND ENDGERÄTEVORRICHTUNG
PROCÉDÉ D'ACCÈS ALÉATOIRE ET DISPOSITIF TERMINAL

(43) Date of publication of application: 06.11.2019
(73) Proprietor: GUANGDONG OPPO MOBILE TELECOMMUNICATIONS CORP., LTD., Dongguan, Guangdong 523860 (CN)
(72) Inventor: LIU, JianHua, Dongguan Guangdong 523860 (CN); YANG, Ning, Dongguan Guangdong 523860 (CN)
(74) Representative: Manitz Finsterwald Patent- und Rechtsanwaltspartnerschaft mbB
(86) International application number: PCT/CN2017/070330
(87) International publication number: WO 2018/126418

(56) References cited:
- EP-A1- 3 530 059
- WO-A1-2015/137632
- WO-A1-2018/075256
- CN-A- 101 682 591
- CN-A- 101 977 401
- CN-A- 102 244 927
- CN-A- 104 254 135
- US-B1- 7 526 307
- NOKIA ET AL: "Considerations on NR RACH procedures", vol. RAN WG2, no. Reno, USA; 20161114 - 20161118, 4 November 2016 (2016-11-04), XP051192332, Retrieved from the Internet <URL:http://www.3gpp.org/ftp/tsg_ran/WG2_RL2/TSGR2_96/Docs/> [retrieved on 20161104]

## Description

### TECHNICAL FIELD

The present disclosure relates to the communication field, and more particularly, to a method for random access and terminal device.

### BACKGROUND

Random access is the most basic function that a cellular system should have, which makes it possible for a terminal device to establish a communication connection with network. A success rate of random access depends on whether a random access process can be successfully completed.

With the development of wireless communication technology, wireless environment is also more complicated, and a more flexible random access process is required at this time.

How to achieve more flexible random access is an urgent problem to be solved.
Nokia: "Considerations on NR RACH procedures", R2-168013, introduces 4-step RACH procedure and 2-step RACH procedure, and lists some of the use cases and scenarios which can specifically benefit from the lower latency in the 2-step RACH procedure. WO2015137632A1 discloses a method for allocating a temporary radio network temporary identifier to a terminal within a random access procedure in a wireless communication system.
EP3530059A1 and WO2018075256A1 disclose selecting a two-step RACH procedure or a four-step RACH procedure at the UE based at least on RACH configuration information received from a base station or the RACH configuration information at the UE.

### SUMMARY

The invention is set out in the appended set of claims. Embodiments of the present disclosure provide a method for random access according to claim 1 and a terminal device according to claim 4, which can implement a more flexible random access process.

Therefore, in the embodiments of the present disclosure, when performing the random access process, the terminal device can select the random access manner, so that random access can be flexibly performed.

### BRIEF DESCRIPTION OF THE DRAWINGS

In order to illustrate technical solutions of embodiments of the present disclosure more clearly, drawings used in the description of the embodiments or the related art will be briefly described below. Obviously, the drawings in the following description are only some of the embodiments in the present disclosure. Those skilled in the art may obtain other drawings according to the drawings without any creative work. Except for the embodiments in which the first random access manner is determined according to a current link quality value and the sixth corresponding relationship, other embodiments in which the first random access manner is determined based on other parameters, which do not fall within the scope of the appended claims, are to be interpreted as example embodiments or background information useful only for understanding the invention.
Fig. 1 is a diagram showing an application scenario according to an embodiment of the present application.
Fig. 2 is a schematic flowchart showing a method for random access according to an embodiment of the present application.
Fig. 3 is a schematic flowchart showing a 4-step random access process according to an embodiment of the present application.
Fig. 4 is a schematic flowchart showing 2-step random access process according to an embodiment of the present application.
Fig. 5 is a schematic block diagram showing a terminal device according to an embodiment of the present application.
Fig. 6 is a schematic block diagram showing a terminal device according to an embodiment of the present application.
Fig. 7 is a schematic block diagram showing a system chip according to an embodiment of the present application.

### DETAILED DESCRIPTION

Technical solutions in embodiments of the present application will be described below with reference to the drawings in the embodiments of the present application. It is obvious that the described embodiments are a part of the embodiments of the present application, instead of all the embodiments. All other embodiments obtained by those ordinary skilled in the art based on the embodiments of the present disclosure without any creative work are within the protection scope of the present application.

The technical solutions in the embodiments of the present application may be applied to various communication systems, for example, Global System of Mobile Communication (GSM) system, Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD), Universal Mobile Telecommunication System (UMTS), Worldwide Interoperability for Microwave Access (WiMAX) communication system, or future 5G system.

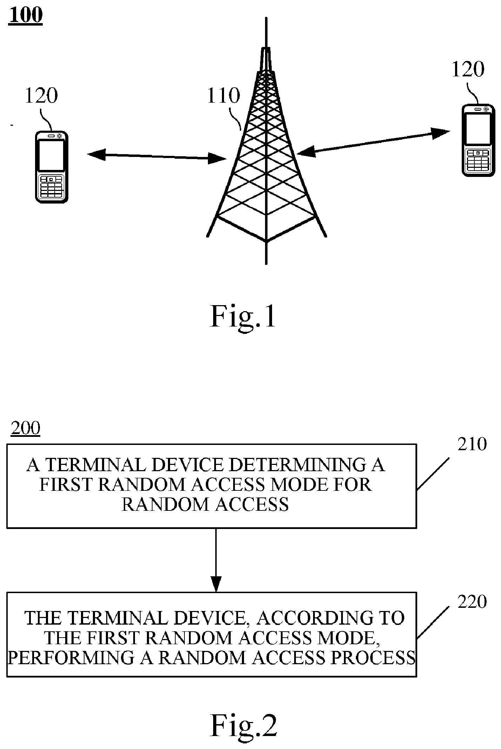

Fig. 1 illustrates a wireless communication system 100 to which the embodiments of the present application are applied. The wireless communication system 100 may include a network device 110. The network device 110 may be a device which communicates with the terminal device. The network device 100 may provide communication coverage for a particular geographic area and may communicate with the terminal device (e.g. UE) located within the coverage area. Optionally, the network device 100 may be a Base Transceiver Station (BTS) in a GSM system or a CDMA system, or may be a NodeB (NB) in a WCDMA system, or may be an Evolutional Node B (eNB or eNodeB) in an LTE system, or a wireless controller in a Cloud Radio Access Network (CRAN), or the network device may be a relay station, an access point, an in-vehicle device, a wearable device, a network side device in the future 5G network or the network device in an evolved Public Land Mobile Network (PLMN) in the future, or the like.

The wireless communication system 100 also includes at least one terminal device 120 located within the coverage of the network device 110. The terminal device 120 may be mobile or fixed. Optionally, the terminal device 120 may refer to an access terminal, a User Equipment (UE), a subscriber unit, a subscriber station, a mobile station, a mobile platform, a remote station, a remote terminal, a mobile device, a user terminal, a terminal, a wireless communication device, a user agent or a user apparatus. The access terminal may be a cellular phone, a cordless phone, a Session Initiation Protocol (SIP) phone, a Wireless Local Loop (WLL) station, a Personal Digital Assistant (PDA), a handheld device having a wireless communication function, a computing device or other processing device connected to a wireless modem, an in-vehicle device, a wearable device, a terminal device in a future 5G network, or a terminal device in an evolved PLMN in the future.

Optionally, a 5G system or network may also be referred as a New Radio (NR) system or network.

Fig. 1 exemplarily shows one network device and two terminal devices. Optionally, the wireless communication system 100 may include a plurality of network devices, and other number of terminal devices may be included in the coverage of each network device, which is not limited in the embodiments of the present application.

Optionally, the wireless communication system 100 may further include other network entities such as a network controller, and a mobility management entity, which is not limited in the embodiments of the present application.

It should be understood that the terms "system" and "network" are used interchangeably herein. The term "and/or" herein is merely used for describing an association relationship of associated objects, and indicates that there may be three relationships, for example, A and/or B, may represent three situations: A exists alone, A and B coexist, and B exists alone. In addition, the character "/" herein generally indicates that the contextual objects are of an "or" relationship.

Fig. 2 is a schematic flowchart showing a method 200 for random access according to an embodiment of the present application. The method may optionally be performed by the terminal device shown in Fig. 1.

As shown in Fig. 2, the method 200 includes the followings.

In step 210, a first random access manner for random access is determined by a terminal device.

In step 220, according to the first random access manner, random access process is performed by the terminal device.

Optionally, numbers of interactive messages and/or information carried in the interactive messages, in the random access processes performed by using different random access manners, are different.

Optionally, the random access process performed by using the first random access manner is a 4-step random access process or a 2-step random access process.

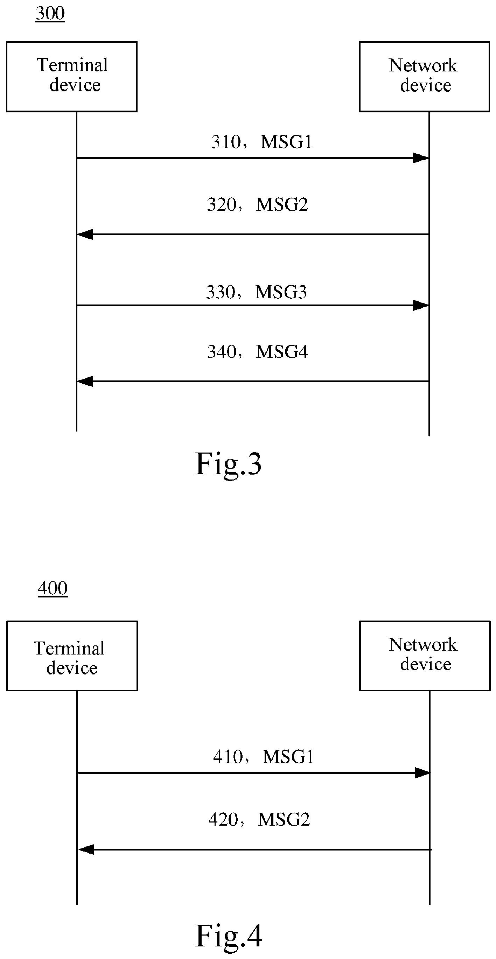

For ease of understanding, the 4-step random access process will be described below in combination with Fig. 3, and the 2-step random access process will be described in combination with Fig. 4.

As shown in Fig. 3, the method 300 includes the followings.

In 310, the terminal device sends MSG1 on a random access channel, and MSG1 is a message carrying a random access preamble.

In 320, after receiving the MSG1, the network device sends MSG2 on a Downlink Share Channel (DL-SCH), where the MSG2 is a Random Access Response (RAR), and the RAR response carries a TA adjustment, an uplink grant command and a Temporary Cell Radio Network Temporary Identifier (T-CRNTI), that is, a temporary CRNTI.

Optionally, MSG2 message is generated by the Media Access Control (MAC) layer of the network device, and is carried by DL_SCH, and one MSG2 message may simultaneously correspond to random access request responses of multiple terminal devices.

Optionally, the network device uses a Physical Downlink Control Channel (PDCCH) to schedule the MSG2, and addresses by a Random Access Radio Network Temporary Identifier (RA-RNTI), the RA-RNTI being determined by a time-frequency resource position of a Physical Random Access Channel (PRACH) carrying the MSG1.

Optionally, the MSG2 includes a timing advance of uplink transmission, an uplink resource allocated for MSG3, the temporary C-RNTI, and the like.

In 330, after receiving the MSG2, the terminal device determines whether it belongs to its own RAR message, and when determining that it belongs to its own RAR message, the terminal device sends MSG3, the MSG-3 carriying UE-ID, where in the MSG3, a RRC Connection Request generated by a RRC layer of the UE is transmitted, and the RRC connection request may be mapped to a Common Control Channel (CCCH) on the Uplink Shared Channel (UL-SCH) to send.

Optionally, in the method shown in Fig. 3, in the random access process, the MSG1 and the MSG2 are low-level messages, and Layer 3 (L3) is invisible, therefore, in signaling tracking, the first signaling of the terminal device to access the network may be MSG3.

Optionally, after receiving the MSG2, the network device transmits the MSG3 on its allocated uplink resource.

In 340, after receiving the MSG3 message, the network device may send MSG4, where the MSG4 carries the UE-ID, and in the MSG4, a RRC Contention Resolution message is transmitted, the message is generated by the RRC layer of the network device, and is sent on a CCCH or Dedicated Control Channel (DCCH) mapped onto the DL-SCH. After receiving the MSG4, if the MSG4 carries its own UE-ID, the terminal device determines that the random access is successful.

Optionally, in the embodiments of the present application, content included in each message in the random access process may be different for different scenarios.

For example, for initial access of the terminal device: the MSG3 may carry the RRC connection request generated by the RRC layer, including S-TMSI or a random number of the UE.

For example, for connection reestablishment, the MSG3 may carry an RRC connection reestablishment request generated by the RRC layer, C-RNTI and PCI.

For example, for a cell handover of the terminal device, the MSG3 message may carry a RRC handover complete message generated by the RRC layer and the C-RNTI of the UE.

For example, for a scenario where uplink/downlink data arrives, the MSG3 may transmit the C-RNTI of the terminal device.

The description of competition judgment, scheduling, and C-RNTI in different scenarios is shown in Table 1 below.

**Table 1**

| Competitive resolution | Initial access and connection re-establishment | Switching, scene where upstream/downstream data arrives |
|---|---|---|
| Competition judgment | The MSG4 carries a copy of successfully demodulated MSG3 message, and the UE compares it with a high layer identifier sent by the UE in the MSG3, if the two are the same, it is judged as successful competition. | If the terminal device receives a command to schedule the MSG4 on the PDCCH, the competition succeeds. |
| Scheduling | The MSG4 uses the PDCCH scheduling scrambled by temporary C-RNTI. | The network device uses the PDCCH scrambled by the C-RNTI to schedule MSG4. |
| C-RNTI | The temporary C-RNTI delivered in MSG2 is upgraded to the C-RNTI of the UE after the competition is successful. | The terminal device has previously been assigned the C-RNTI, which is also sent to the network device in the MSG3. After the competition is resolved, the temporary C-RNTI is reclaimed and the original C-RNTI of the terminal device is continued to be used. |

It should be understood that the method 300 shown in Fig. 3 is only one specific implementation manner of the 4-step random access process, and the scope of protection of the present disclosure should not be limited.

Fig. 4 is a schematic diagram showing 2-step random access process according to an embodiment of the present application. As shown in Fig. 4, the random access method 400 includes the followings.

In 410, the terminal device sends the MSG1, where the MSG1 carries the random access preamble, and carries identification information of the terminal device, state information of data cache and request information of connection establishment to be sent by the terminal device.

In 420, the network device sends the MSG2 to the terminal device, where the MSG2 carries a TA adjustment, an uplink grant command, and a T-CRNTI, and carries at least one of the identification information of the terminal device and response information of the connection establishment.

It should be understood that the method 400 shown in Fig. 4 is only one specific implementation manner of the 2-step random access process, and the scope of protection of the present disclosure should not be limited.

It should also be understood that, in the embodiments of the present disclosure, the random access manner is not limited in dividing according to steps included in the random access process, there are also other division ways, which is not limited in the embodiments of the present disclosure.

Therefore, in the embodiments of the present disclosure, when performing the random access process, the terminal device may select the random access manner, so that the random access may be flexibly performed.

Optionally, in the embodiments of the present disclosure, the network device may indicate the random access manner when the terminal device needs to initiate the random access process, and the terminal device may send the random access process of a corresponding manner according to an indication of the network device.

Optionally, in the embodiments of the present disclosure, the terminal device determines the random access manner according to the indication information of an upper layer.

For example, when the terminal device in an idle state needs to initiate a RRC connection establishment, if a Non-Access Stratum (NAS) layer indicates that an Access Stratum (AS) needs to perform the 2-step random access process, the terminal initiates a 2-step random access process; otherwise, the 4-step random access process is initiated.

For example, when the terminal device in the idle state needs to initiate the RRC connection establishment, a NAS layer indicates to the AS layer the service information needing to be transmitted, and then the random access manner may be selected according to the service information to be transmitted.

Optionally, in the embodiments of the present disclosure, according to at least one of following information, the terminal device determines the first random manner:
pre-configured multiple random access manners;
a random function;
level information of the terminal device;
service information of service to be transmitted by the terminal device;
a triggering reason of the random access process;
a current link quality value between the terminal device and a network device;
position information about where the terminal device is located currently;
a time at which the terminal device performs the random access process;
a resource used by the terminal device for performing the random access process;
a frequency band in which a frequency domain resource used by the terminal device for performing the random access process is located;
a frequency band supported by the terminal device;
a basic parameter set used by the terminal device for performing the random access process;
a random access manner used when a historical random access process is performed; and
whether a timer initiated when the historical random access process is performed expires.

For ease of understanding, the followings describe how to determine the first random access manner in combination with a specific implementation manner.

In one implementation manner, the terminal device determines the first random access method from pre-configured multiple random access manners.

The pre-configured multiple random access manners may be configured by the network device for the terminal device. Alternatively, they may be pre-configured in other ways, for example, they may be pre-configured at a factory or at initialization.

In one implementation manner, the terminal device acquires a first probability value based on the random function; and determines the first random access manner according to a first corresponding relationship and the first probability value, where the first corresponding relationship is used to indicate a corresponding relationship between at least one probability range and at least one random access manner.

Specifically, the network device configures, in system information, the probability range to the terminal device for performing the 2-step random access process and/or the 4-step random access process. Before initiating the random access process, the terminal device acquires a probability value by using the random function, and the random access process corresponding to the probability range to which the probability value belongs may be selected. It should be understood that the network device may only configure the probability range of the 2-step or 4-step random access process, if it is within the probability range configured by the network device, the corresponding random access process is selected; otherwise, the other random access process is selected.

In one implementation manner, the terminal device acquires a second probability value based on the random function; and determines the first random access manner according to a second corresponding relationship, the second probability value and a level indicated by the level information of the terminal device, where the second corresponding relationship is used to indicate a corresponding relationship between at least one level of the terminal device, at least one probability range and at least one random manner.

Specifically, the network device configures the second corresponding relationship in the system information, where the second corresponding relationship is used to indicate the probability range and the random access manner corresponding to each level of the terminal device. For example, for a level A of the terminal device, when the probability range is 0-50, the random access manner is the 2-step random access process, and when the probability range is 51-100, the random access manner is the 4-step random access process.

It should be understood that the network device may only configure the probability range of the 2-step or 4-step random access process for a certain terminal level, if it is within the probability range configured by the network device, the corresponding random access process is selected; otherwise, the other random access process is selected.

In one implementation manner, the terminal device acquires a third probability value based on the random function; and determines the first random access manner according to a third corresponding relationship, the third probability value and a service quality level indicated by the service information of the service to be transmitted by the terminal device, where the third corresponding relationship is used to indicate a corresponding relationship between at least one service quality level, at least one probability range and at least one random manner.

Specifically, the network device configures the third corresponding relationship in the system information, where the third corresponding relationship is used to indicate the probability range and the random access manner corresponding to each service quality level. For example, for a service quality level A, when the probability range is 0-50, the random access manner is the 2-step random access process, and when the probability range is 51-100, the random access manner is the 4-step random access process.

It should be understood that the network device may only configure the probability range of the 2-step or 4-step random access process for a certain service quality level, if it is within the probability range configured by the network device, the corresponding random access process is selected, otherwise; the other random access process is selected.

Optionally, the service information of the service to be transmitted by the terminal device is used to indicate at least one of followings:
a service quality level of the service to be transmitted, a delay requirement of the service to be transmitted, a data amount of the service to be transmitted, a service type of the service to be transmitted, a call type of the service to be transmitted, a carrier to which the service to be transmitted belongs, and a data stream to which the service to be transmitted belongs, a logical channel to which the service to be transmitted belongs.

Optionally, the service information of the service to be transmitted by the terminal device is carried in a paging message of the network device.

In one implementation manner, the terminal device determines the first random access manner, according to a fourth corresponding relationship, and at least one of the service quality level of the service to be transmitted, a delay requirement of the service to be transmitted, an data amount of the service to be transmitted, a service type of the service to be transmitted, a call type of the service to be transmitted, a carrier to which the service to be transmitted belongs, a data stream to which the service to be transmitted belongs, a logical channel to which the service to be transmitted belongs.

The fourth corresponding relationship is used to indicate a corresponding relationship between at least one random access manner and at least one of follows: at least one service quality level, at least one delay requirement, at least one range of the data amount, at least one service type, at least one call type, at least one carrier, at least one data stream, and at least one logical channel, and at least one random access manner.

For example, when initiating the random access process, the terminal device may evaluate a data amount currently cached. If the data amount is less than or equal to a certain threshold, the 2-step random access process is initiated; otherwise, the 4-step random access process is initiated. The data amount cached may be the data amount of the cached data of the second layer, or the data amount of the cached data of an application layer, or a sum of the data amounts of the cached data of each layer. The threshold may be configured via the network or agreed by agreement.

It should be understood that, in the embodiments of the present disclosure, the fourth corresponding relationship may be the corresponding relationship between one type of service information of the service to be transmitted and the random access manner, or the corresponding relationship between multiple types of service information and the random access manner.

It should be understood that, in the embodiments of the present disclosure, when configuring the fourth corresponding relationship, the network device may only configure the service information corresponding to the 2-step random access process or the 4-step random access process. If the service information of the service to be transmitted by the terminal device belongs to the pre-configured service information, the corresponding random access process is selected; otherwise the other random access process is selected.

In one implementation manner, the terminal device determines the first random access manner, according to the triggering reason of the random access process and a fifth corresponding relationship, where the fifth corresponding relationship is used to indicate a corresponding relationship between at least one triggering reason and at least one random access manner of the random access process.

Optionally, in the embodiments of the present disclosure, the triggering reason of the random access process is any one of followings:
requesting an initial access by the terminal device;
converting from an idle state to a continuous state by the terminal device;
requesting an uplink synchronization by the terminal device;
requesting a terminal device identification to the network device by the terminal device;
performing a resource request to the network device by the terminal device;
a cell handover of the terminal device; and
a failure of a radio link of the terminal device.

In one implementation manner, the terminal device determines the first random access manner, according to a sixth corresponding relationship, and a current link quality value between the terminal device and the network device.

The sixth corresponding relationship is used to indicate a corresponding relationship between at least one link quality value and at least one random access manner.

For example, when the terminal device needs to initiate the random access process, current downlink quality may be evaluated. If the current link quality value satisfies the condition for initiating the 2-step random access process, the 2-step random access process is initiated; otherwise, the 4-step random access process is initiated. Specifically, a link quality threshold initiated by the 2-step random access is pre-configured, if the current link quality value is greater than or equal to the threshold, the 2-step random access process is initiated; otherwise, the 4-step random access process is initiated.

In one implementation manner, the terminal device determines the first random access manner, according to a seventh corresponding relationship, and a position indicated by the position information about where the terminal device is located currently.

The seventh corresponding relationship is used to indicate the corresponding relationship between at least one position and at least one random access manner.

Optionally, the position information about where the terminal device is located currently is used to indicate a cell, a tracking area, a paging area or a service area where the terminal device is located currently.

Specifically, the network device may send, in the system information, the cell, the tracking area, the paging area, or the service area (also referred as a business service area) used by the 2-step and/or 4-step random access process to the terminal device, or the terminal device may acquire the information from core network through subscription information or through the message of the NAS layer.

In one implementation manner, the terminal device determines the first random access manner, according to an eighth corresponding relationship, and the time at which the terminal device performs the random access process.

The eighth corresponding relationship is used to indicate a corresponding relationship between at least one time range and at least one random access manner.

A time range of each random access manner may be in the unit of hour or day, for example, the 2-step random access process is adopted at 0:00-12:00 every day, and the 4-step random access process is adopted at other times.

In one implementation manner, the terminal device determines the first random access manner, according to a ninth corresponding relationship, and the resource used by the terminal device for performing the random access process.

The ninth corresponding relationship is used to indicate a corresponding relationship between at least one resource range and at least one random access manner.

Optionally, the resource used to determine the random access manner may be at least one of a time domain, a frequency domain, a code domain, and an air domain (e.g., a beam) resource.

Optionally, the network device may configure the ninth corresponding relationship by using the system information.

In one implementation manner, the terminal device determines the first random access manner, according to a tenth corresponding relationship, and the frequency band supported by the terminal device or the frequency band in which the frequency domain resource used by the terminal device for performing the random access process is located.

The tenth corresponding relationship is used to indicate a corresponding relationship between at least one frequency band and at least one random access manner.

Specifically, the network device may configure the 2-step or 4-step random access process available on a specific frequency band, and the terminal selects a corresponding random access process according to a frequency band selected for the random access or a supported frequency band.

In one implementation manner, the terminal device determines the first random access manner, according to an eleventh corresponding relationship, and the basic parameter set used by the terminal device for performing the random access process.

The eleventh corresponding relationship is used to indicate a corresponding relationship between at least one basic parameter set and at least one random access manner.

The basic parameter set mentioned in the embodiments of the present disclosure may include at least one of the following parameters:
a subcarrier spacing, the number of subcarriers in a specific bandwidth, the number of subcarriers in a Physical Resource Block (PRB), a length of an Orthogonal Frequency Division Multiplexing (OFDM) symbol, a Fourier transform for generating an OFDM signal, such as a Fast Fourier Transform (FFT) or an inverse Fourier transform such as an Inverse Fast Fourier Transform (IFFT), the number of OFDM symbols in the Transmission Time Interval (TTI), the number of TTIs included in a specific time length, and the length of the signal prefix.

The subcarrier spacing refers to a frequency interval of adjacent subcarriers, for example, 15kHz, 60kHz, etc.; the number of subcarriers in the specific bandwidth is, for example, the number of subcarriers corresponding to each possible system bandwidth; the number of subcarriers included in the PRB may be, for example, an integer multiple of 12; the number of OFDM symbols included in the TTI may be, for example, an integer multiple of 14; the number of TTIs included in a certain time unit may refer to the number of TTIs included in the time length of 1 ms or 10 ms; the length of the signal prefix is, for example, the time length of the cyclic prefix of the signal, or whether the cyclic prefix using a regular CP or an extended CP.

Specifically, the network device configures the random access process adopted by the 2-step or 4-step random access process to the terminal device, and the terminal determines the random access process to be adopted according to a selected basic parameter set.

In one implementation manner, when a predetermined number of the random access processes are initiated by adopting a second random access manner and the access is not successful, the terminal device determines the first random access manner, the first random access manner being different from the second random access manner.

Specifically, the network device may configure a maximum number N of repeated transmissions for performing the 2-step or 4-step random access process. When the terminal device fails to access after performing N times of a certain random access process, the terminal device adopts another random access process, where N>1, and the first transmission by the terminal is counted as 1.

Optionally, in the embodiments of the present disclosure, the terminal selects an access manner that is the same as or different from the last random access in a time T configured by the network or predefined by the agreement.

In one implementation manner, when the timer for determining the random access manner initiated when the historical random access process is performed is not expired, the same random access manner as that used by the historical random access process is determined as the first random access manner; or,
when the timer for determining the random access manner initiated when the historical random access process is performed is expired, a different random access manner from that used by the historical random access process is determined as the first random access manner.

Optionally, the timer for determining the random access process initiated by the historical random access process is performed is a timer that is initiated by a previous random access process; and the terminal device initiates the timer for determining the random access manner in each random access process.

Optionally, the terminal device initiates the timer for determining the random access manner for a subsequent random access process after the timer that was initiated last time for determining the random access manner is expired.

The terminal device initiates the timer for determining the random access manner for a subsequent random access process in the random access process after the timer that was initiated last time for determining the random access manner is expired.

Specifically, the terminal device may initiate the timer again when the random access process is initiated after the started timer expires, or initiate the timer again when the random access succeeds.

In the embodiments of the present disclosure, the terminal device may initiate the timer when the random access fails after the started timer expires. In this case, when the timer is not expired, the terminal device may select the random access manner different from that used in the present random access process, and when the timer expires, the terminal device may select the random access manner which the same as that used in the present random access process.

Optionally, various corresponding relationships or thresholds and the like mentioned in the embodiments of the present disclosure may be pre-configured, for example, they may be configured by the network device for the terminal device, or may be preset when leaving the factory, preset when being initialized, or obtained through subscription information.

Optionally, various corresponding relationships or thresholds and the like mentioned in the embodiments of the present disclosure may be pre-configured by the NAS layer.

The specific implementation manner of selecting the random access manner when the terminal device performs the random access process is described above, but it should be understood that the embodiments of the present disclosure are not limited this.

Optionally, in the embodiments of the present disclosure, the terminal device performs the random access process by using a resource configured for the first random access manner or a resource configured for a second random access manner, according to the first random access manner.

Specifically, the network device may configure, by the system information, the time domain, the frequency domain, the code domain, and the spatial (e.g., beam) resource adopted in the 2-step or 4-step random access process to the terminal device, and the terminal selects the corresponding resource according to the configuration of the network to send the 2-step or 4-step random access process. The access network determines the random access process sent by the terminal according to the corresponding resource position.

Optionally, the network may configure the terminal device that performs the 2-step or 4-step random access to preempt the random access resource of another random access process. The terminal that performs the 2-step or 4-step random access may use the resource of the 4-step or 2-step random access process.

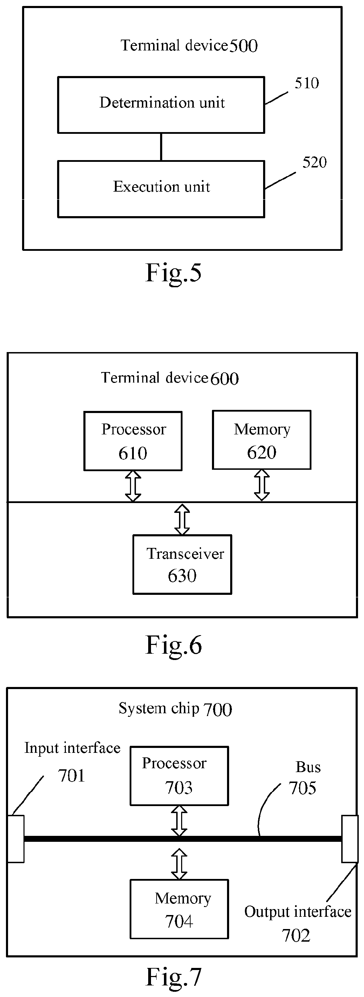

Fig. 5 is a schematic block diagram showing a terminal device 500 according to an embodiment of the present application. As shown in Fig. 5, the terminal device includes a determination unit 510 and an execution unit 520. The determination unit 510 is configured to determine a first random access manner for random access, and the execution unit 520 is configured to perform random access process according to the first random access manner.

Optionally, numbers of interactive messages and/or information carried in the interactive messages, in the random access processes performed by using different random access manners, are different.

Optionally, the random access process performed by using the first random access manner is a 4-step random access process or a 2-step random access process.

Optionally, the determination unit 510 is further configured to determine the first random manner according to at least one of following information:
pre-configured multiple random access manners;
a random function;
level information of the terminal device;
service information of service to be transmitted by the terminal device;
a triggering reason of the random access process;
a current link quality value between the terminal device and a network device;
position information about where the terminal device is located currently;
a time at which the terminal device performs the random access process;
a resource used by the terminal device for performing the random access process;
a frequency band in which a frequency domain resource used by the terminal device for performing the random access process is located;
a frequency band supported by the terminal device;
a basic parameter set used by the terminal device for performing the random access process;
a random access manner used when a historical random access process is performed;
whether a timer started when the historical random access process is executed expires.

Optionally, the determination unit 510 is further configured to:
determine the first random access manner from pre-configured multiple random access manners.

Optionally, the determination unit 510 is further configured to:
acquire a first probability value based on the random function;
determine, according to a first corresponding relationship and the first probability value, the first random access manner, wherein, the first corresponding relationship is used to indicate a corresponding relationship between at least one probability range and at least one random access manner.

Optionally, the determination unit 510 is further configured to:
acquire a second probability value based on the random function;
determine, according to a second corresponding relationship, the second probability value and a level indicated by the level information of the terminal device, the first random access manner, wherein, the second corresponding relationship is used to indicate a corresponding relationship between at least one level of the terminal device, at least one probability range and at least one random manner.

Optionally, the determination unit 510 is further configured to:
acquire a third probability value based on the random function;
determine, according to a third corresponding relationship, the third probability value and a service quality level indicated by the service information of the service to be transmitted by the terminal device, the first random access manner, wherein, the second corresponding relationship is used to indicate a corresponding relationship between at least one service quality level, at least one probability range and at least one random manner.

Optionally, the service information of the service to be transmitted by the terminal device is used to indicate at least one of followings:
a service quality level of the service to be transmitted, a delay requirement of the service to be transmitted, a data amount of the service to be transmitted, a service type of the service to be transmitted, a call type of the service to be transmitted, a carrier to which the service to be transmitted belongs, a data stream to which the service to be transmitted belongs, and a logical channel to which the service to be transmitted belongs.

Optionally, the service information of the service to be transmitted by the terminal device is carried in a paging message of a network device.

Optionally, the determination unit 510 is further configured to:
determine the first random access manner, according to a fourth corresponding relationship, and at least one of the service quality level of the service to be transmitted, a delay requirement of the service to be transmitted, a data amount of the service to be transmitted, a service type of the service to be transmitted, a call type of the service to be transmitted, a carrier to which the service to be transmitted belongs, a data stream to which the service to be transmitted belongs, and a logical channel to which the service to be transmitted belongs;
wherein, the fourth corresponding relationship is used to indicate a corresponding relationship between at least one random access manner and at least one of follows: at least one service quality level, at least one delay requirement, at least one range of the data amount, at least one service type, at least one call type, at least one carrier, at least one data stream, and at least one logical channel.

Optionally, the triggering reason of the random access process is any one of followings:
requesting an initial access by the terminal device;
converting from an idle state to a continuous state by the terminal device;
requesting an uplink synchronization by the terminal device;
requesting a terminal device identification to the network device by the terminal device;
performing a resource request to the network device by the terminal device;
a cell handover of the terminal device;
a failure of a radio link of the terminal device.

Optionally, the determination unit 510 is further configured to:
determine the first random access manner, according to the triggering reason of the random access process and a fifth corresponding relationship, wherein, the fifth corresponding relationship is used to indicate the corresponding relationship between at least one triggering reason and at least one random access manner of the random access process.

Optionally, the determination unit 510 is further configured to:
determine the first random access manner, according to a sixth corresponding relationship, and a current link quality value between the terminal device and the network device;
wherein, the sixth corresponding relationship is used to indicate a corresponding relationship between at least one link quality value and at least one random access manner.

Optionally, the determination unit 510 is further configured to:
determine the first random access manner, according to a seventh corresponding relationship, and a position indicated by the position information about where the terminal device is located currently;
wherein, the seventh corresponding relationship is used to indicate a corresponding relationship between at least one position and at least one random access manner.

Optionally, the position information about where the terminal device is located currently is used to indicate a cell, a tracking area, a paging area or a service area where the terminal device is located currently.

Optionally, the determination unit 510 is further configured to:
determine the first random access manner, according to an eighth corresponding relationship, and the time at which the terminal device performs the random access process;
wherein, the eighth corresponding relationship is used to indicate a corresponding relationship between at least one time range and at least one random access manner.

Optionally, the determination unit 510 is further configured to:
determine the first random access manner, according to a ninth corresponding relationship, and the frequency band supported by the terminal device or the resource used by the terminal device for performing the random access process;
wherein, the ninth corresponding relationship is used to indicate a corresponding relationship between at least one resource range and at least one random access manner.

Optionally, the determination unit 510 is further configured to:
determine the first random access manner, according to a tenth corresponding relationship, and the frequency band in which the frequency domain resource used by the terminal device for performing the random access process is located;
wherein, the tenth corresponding relationship is used to indicate a corresponding relationship between at least one frequency band and at least one random access manner.

Optionally, the determination unit 510 is further configured to:
determine the first random access manner, according to a eleventh corresponding relationship, and the basic parameter set used by the terminal device for performing the random access process;
wherein, the eleventh corresponding relationship is used to indicate a corresponding relationship between at least one basic parameter set and at least one random access manner.

Optionally, the determination unit 510 is further configured to:
when initiating a predetermined number of the random access process by adopting the second random access manner and the access is not successful, determine, by the terminal device, the first random access manner, the first random access manner being different from the second random access manner.

Optionally, the determination unit 510 is further configured to:
when the timer for determining the random access manner initiated when the historical random access process is performed is not expired, determine the same random access manner as that used by the historical random access process as the first random access manner; or,
when the timer for determining the random access manner initiated when the historical random access process is performed is expired, determine a different random access manner from that used by the historical random access process as the first random access manner.

Optionally, the timer for determining the random access process initiated when the historical random access process is a timer that is initiated by a previous random access process; and the determination unit 510 is further configured to:
initiate the timer for determining the random access manner in each random access process.

Optionally, the determination unit 510 is further configured to:
initiating, by the terminal device, the timer for determining the random access manner for a subsequent random access process in the random access process after the timer that was initiated last time for determining the random access manner is expired.

Optionally, the execution unit 520 is further configured to:
perform, by the terminal device, the random access process, according to the first random access manner, by using a resource configured for the first random access manner or a resource configured for a second random access manner.

It should be understood that the terminal device 500 may perform the method 200 shown in Fig. 2, and it will not be elaborated herein for brevity.

Fig. 6 is a schematic block diagram showing a terminal device according to an embodiment of the present application. As shown in Fig. 6, the device 600 includes a processor 610 and a memory 620. The memory 620 may store the program code, and the processor 610 may perform the program code stored in the memory 620.

Optionally, as shown in Fig. 6, the device 600 may include a transceiver 630, and the processor 610 may control the transceiver 630 to communicate externally.

Optionally, the processor 610 may call the program code stored in the memory 620 to perform the corresponding operations of the terminal device in the method 200 shown in Fig. 2, and it will not be elaborated herein for brevity.

Fig. 7 is a schematic block diagram showing a system chip according to an embodiment of the present application. The system chip 700 in Fig. 7 includes an input interface 701, an output interface 702, the processor 703 and the memory 704 are connected by a communication connection, and the processor 703 is configured to execute the code in the memory 704.

Optionally, when the code is performed, the processor 703 implements the method performed by the terminal device in the method embodiment. It will not be elaborated herein for brevity.

Those of ordinary skills in the art may be aware that, the units and algorithm steps in individual examples described in combination with the embodiments described in the present disclosure may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present application.

It may be clearly understood by those skilled in the art that, for the purpose of convenient and brief description, for a detailed working process of the foregoing system, device, and unit, reference may be made to a corresponding process in the foregoing method embodiments, and details are not described herein again.

In the several embodiments provided in the present application, it should be understood that the disclosed systems, devices and methods may be implemented in other ways. For example, the device embodiments described above are merely illustrative. For example, the division of the units is only a kind of logical function division. In practice, other division manner may be used. For example, multiple units or components may be combined or integrated into another system, or some features may be ignored or not performed. In addition, the illustrated or discussed mutual coupling or direct coupling or communication connection may be indirect coupling or communication connection through some interfaces, devices or units, and may be in electrical, mechanical or other forms.

The units described as separated parts may or may not be physically separated, and the parts displayed as units may or may not be physical units, that is, may be located in one place, or may be distributed on multiple network units. Some or all of the units may be selected according to actual needs to achieve the objectives of the solutions in the embodiments.

In addition, each functional unit in each embodiment of the present application may be integrated in one processing unit, or each unit may exist alone physically, or two or more units may be integrated in one unit.

The functions may also be stored in a computer-readable storage medium if being implemented in the form of a software functional unit and sold or used as an independent product. Based on such understanding, the essence of the technical solutions of the present application, or the part contributing to the prior art or all or a part of the technical solutions, may be embodied in the form of a software product. The computer software product is stored in a storage medium including a number of instructions such that a computer device (which may be a personal computer, a server, or a network device, etc.) performs all or a part of steps of the method described in each of the embodiments of the present application. The foregoing storage medium includes: any medium that is capable of storing program codes such as a USB disk, a mobile hard disk, a Read-Only Memory (ROM), a Random Access Memory (RAM), a magnetic disk or an optical disk, and the like.

## Claims

1. A method for random access, comprising:
determining (210), by a terminal device, a first random access manner for random access; and
performing (220), by the terminal device, random access process according to the first random access manner,
wherein the determining (210) by the terminal device, the first random access manner for random access, comprises:
determining, by the terminal device, the first random access manner, according to a sixth corresponding relationship, and a current link quality value between the terminal device and the network device;
wherein, the sixth corresponding relationship is used to indicate a corresponding relationship between at least one link quality value and at least one random access manner,
wherein the performing, by the terminal device, the random access process according to the first random access manner, comprises:
performing, by the terminal device, the random access process, according to the first random access manner, by using a resource configured for the first random access manner or a resource configured for a second random access manner.

2. The method according to claim 1, wherein, at least one of numbers of interactive messages and information carried in the interactive messages, in the random access processes performed by using different random access manners, are different.

3. The method according to claim 1 or 2, wherein the random access process performed by using the first random access manner is a 4-step random access process or a 2-step random access process.

4. A terminal device, comprising:
a determination unit (510), configured to determine a first random access manner for random access; and
an execution unit (520), configured to perform random access process according to the first random access manner;
wherein the determination unit (510) is further configured to determine the first random access manner, according to a sixth corresponding relationship, and a current link quality value between the terminal device and the network device;
wherein, the sixth corresponding relationship is used to indicate a corresponding relationship between at least one link quality value and at least one random access manner,
wherein the execution unit (520) is further configured to perform the random access process, according to the first random access manner, by using a resource configured for the first random access manner or a resource configured for a second random access manner.

5. The terminal device according to claim 4, wherein, at least one of numbers of interactive messages and information carried in the interactive messages, in the random access processes performed by using different random access manners, are different.

6. The terminal device according to claim 4 or 5, wherein the random access process performed by using the first random access manner is a 4-step random access process or a 2-step random access process.

## Patentansprüche

1. Verfahren für Direktzugriff, umfassend:
Bestimmen (210) einer ersten Direktzugriffweise für Direktzugriff durch eine Endgerätevorrichtung; und
Durchführen (220) eines Direktzugriffprozesses gemäß der ersten Direktzugriffweise durch die Endgerätevorrichtung,
wobei das Bestimmen (210) der ersten Direktzugriffweise für Direktzugriff durch die Endgerätevorrichtung Folgendes umfasst:
Bestimmen der ersten Direktzugriffweise gemäß einer sechsten Entsprechungsbeziehung und eines aktuellen Verbindungsqualitätswerts zwischen der Endgerätevorrichtung und der Netzwerkvorrichtung durch die Endgerätevorrichtung;
wobei die sechste Entsprechungsbeziehung verwendet wird, um eine Entsprechungsbeziehung zwischen mindestens einem Verbindungsqualitätswert und mindestens einer Direktzugriffweise anzugeben,
wobei das Durchführen des Direktzugriffprozesses gemäß der ersten Direktzugriffweise durch die Endgerätevorrichtung Folgendes umfasst:
Durchführen des Direktzugriffprozesses gemäß der ersten Direktzugriffweise unter Verwendung einer Ressource, die für die erste Direktzugriffweise konfiguriert ist, oder einer Ressource, die für eine zweite Direktzugriffweise konfiguriert ist, durch die Endgerätevorrichtung.

2. Verfahren gemäß Anspruch 1, wobei mindestens eine der Anzahlen interaktiver Meldungen und Informationen, die in den interaktiven Meldungen getragen werden, in den Direktzugriffprozessen, die unter Verwendung unterschiedlicher Direktzugriffweisen durchgeführt werden, unterschiedlich ist.

3. Verfahren gemäß Anspruch 1 oder 2, wobei der Direktzugriffprozess, der unter Verwendung der ersten Direktzugriffweise durchgeführt wird, ein 4-stufiger Direktzugriffprozess oder ein 2-stufiger Direktzugriffprozess ist.

4. Endgerätevorrichtung, umfassend:
eine Bestimmungseinheit (510), konfiguriert zum Bestimmen einer ersten Direktzugriffweise für Direktzugriff; und
eine Ausführungseinheit (520), konfiguriert zum Durchführen eines Direktzugriffprozesses gemäß der ersten Direktzugriffweise;
wobei die Bestimmungseinheit (510) ferner konfiguriert ist zum Bestimmen der ersten Direktzugriffweise gemäß einer sechsten Entsprechungsbeziehung und eines aktuellen Verbindungsqualitätswerts zwischen der Endgerätevorrichtung und der Netzwerkvorrichtung;
wobei die sechste Entsprechungsbeziehung verwendet wird, um eine Entsprechungsbeziehung zwischen mindestens einem Verbindungsqualitätswert und mindestens einer Direktzugriffweise anzugeben,
wobei die Ausführungseinheit (520) ferner konfiguriert ist zum Durchführen des Direktzugriffprozesses gemäß der ersten Direktzugriffweise unter Verwendung einer Ressource, die für die erste Direktzugriffweise konfiguriert ist, oder einer Ressource, die für eine zweite Direktzugriffweise konfiguriert ist.

5. Endgerätevorrichtung gemäß Anspruch 4, wobei mindestens eine der Anzahlen interaktiver Meldungen und Informationen, die in den interaktiven Meldungen getragen werden, in den Direktzugriffprozessen, die unter Verwendung unterschiedlicher Direktzugriffweisen durchgeführt werden, unterschiedlich ist.

6. Endgerätevorrichtung gemäß Anspruch 4 oder 5, wobei der Direktzugriffprozess, der unter Verwendung der ersten Direktzugriffweise durchgeführt wird, ein 4-stufiger Direktzugriffprozess oder ein 2-stufiger Direktzugriffprozess ist.

## Revendications

1. Procédé d'accès aléatoire, comprenant :
la détermination (210), par un dispositif terminal, d'un premier mode d'accès aléatoire pour un accès aléatoire ; et
la réalisation (220), par le dispositif terminal, d'un processus d'accès aléatoire selon le premier mode d'accès aléatoire,
la détermination (210), par le dispositif terminal, du premier mode d'accès aléatoire pour un accès aléatoire comprenant :
la détermination, par le dispositif terminal, du premier mode d'accès aléatoire selon une sixième relation de correspondance et une valeur de qualité de liaison courante entre le dispositif terminal et le dispositif de réseau ;
la sixième relation de correspondance servant à indiquer une relation de correspondance entre au moins une valeur de qualité de liaison et au moins un mode d'accès aléatoire,
la réalisation, par le dispositif terminal, du processus d'accès aléatoire selon le premier mode d'accès aléatoire comprenant :
la réalisation, par le dispositif terminal, du processus d'accès aléatoire, selon le premier mode d'accès aléatoire, au moyen d'une ressource configurée pour le premier mode d'accès aléatoire ou d'une ressource configurée pour un deuxième mode d'accès aléatoire.

2. Procédé selon la revendication 1, dans lequel les nombres de messages interactifs et/ou les informations véhiculées dans les messages interactifs, dans les processus d'accès aléatoire réalisés au moyen de modes d'accès aléatoire différents, sont différents.

3. Procédé selon la revendication 1 ou 2, dans lequel le processus d'accès aléatoire réalisé au moyen du premier mode d'accès aléatoire est un processus d'accès aléatoire en 4 étapes ou un processus d'accès aléatoire en 2 étapes.

4. Dispositif terminal, comprenant :
une unité de détermination (510), configurée pour déterminer un premier mode d'accès aléatoire pour un accès aléatoire ; et
une unité d'exécution (520), configurée pour réaliser un processus d'accès aléatoire selon le premier mode d'accès aléatoire ;
l'unité de détermination (510) étant configurée en outre pour déterminer le premier mode d'accès aléatoire selon une sixième relation de correspondance et une valeur de qualité de liaison courante entre le dispositif terminal et le dispositif de réseau ;
la sixième relation de correspondance servant à indiquer une relation de correspondance entre au moins une valeur de qualité de liaison et au moins un mode d'accès aléatoire,
l'unité d'exécution (520) étant configurée en outre pour réaliser le processus d'accès aléatoire, selon le premier mode d'accès aléatoire, au moyen d'une ressource configurée pour le premier mode d'accès aléatoire ou d'une ressource configurée pour un deuxième mode d'accès aléatoire.

5. Dispositif terminal selon la revendication 4, dans lequel les nombres de messages interactifs et/ou les informations véhiculées dans les messages interactifs, dans les processus d'accès aléatoire réalisés au moyen de modes d'accès aléatoire différents, sont différents.

6. Dispositif terminal selon la revendication 4 ou 5, dans lequel le processus d'accès aléatoire réalisé au moyen du premier mode d'accès aléatoire est un processus d'accès aléatoire en 4 étapes ou un processus d'accès aléatoire en 2 étapes.
